(19) Europäisches Patentamt
European Patent Office
Office européen des brevets

(11) **EP 2 003 607 A1**

(12) **EUROPEAN PATENT APPLICATION**

(43) Date of publication:
**17.12.2008 Bulletin 2008/51**

(51) Int Cl.:
***G06Q 30/00*** *(2006.01)*

(21) Application number: **08008896.6**

(22) Date of filing: **14.05.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **23.05.2007 IT MI20071042**

(71) Applicant: **CERTILOGO S.p.A.**
**20123 Milano (IT)**

(72) Inventor: **Vincenzi, Mauricio Jorge**
**31033 Castelfranco Veneto**
**Vicenza (IT)**

(74) Representative: **Petruzzelli, Antonio**
**C.so Italia, No. 43**
**20122 Milano (IT)**

(54) **System and computer process for checking and monitoring the circulation of products and services**

(57)   Process of checking and monitoring products, the essential element whereof consists of using physical products distributed on the market as a vehicle for generating interactive and two-way interrogations with a computer system used for the generation, collection, analysis and interpretation of data suitable for understanding phenomena linked to the market, to commercial fraud, and to the preferences, tastes, places and mode of purchasing by consumers.

Fig. 1

**Description**

The invention relates to a process for the acquisition, analysis, interpretation and supply of data relating to goods or services whereto a unique alphanumerical identification code has been associated in order to provide firms with a tool capable of monitoring the circulation of their products (including therein the circulation on parallel markets), possible commercial fraud (including counterfeiting, theft, irregularities linked to the unlawful exploitation of licences, etc.) and at the same time capable of conveying via interactive and two-way channels information from and to the corporate inspection network, the supply chain, the control authorities, consumers and/or other authorised entities in general.

Processes or systems which fulfil all these purposes are not known, in particular methods are not known which, through the interaction of users with a computer system, are able to retrieve specific information on the authenticity, traceability and customer satisfaction in relation to a product and to obtain from this information elements useful for a series of authorised entities.

Systems are instead known which use codes or chips enclosed with products which claim to be able to guarantee the authenticity of the product against a check by the purchaser.

For example the patent application US2004019791 published on 29/1/2004 describes a method wherein codes are randomly generated that are associated with the objects to be sold. Said codes are stored in a database and the possible request for authentication of a code by a customer produces information relating to the associated object.

Other systems are also known in which the authentication codes are stored on a chip and are not directly accessible to the customer but only to those who have special electronic, optoelectronic tools, etc. Once said code has been retrieved, it can be validated via a comparison with the data stored in a local or remote database.

In a typical model of operation of these systems, on sending of a request for information - via a code - on a product by a user, the system responds in one direction, that is to say that by sending the information requested, without any further processing or search for information.

Said systems have many limitations: a check alone that a code belongs to a database is not necessary an indication of authenticity of the product. An original code, and therefore stored in the database, can in fact be copied and applied to one or more products by a dishonest producer, and a user who were to request validation of the same code would in any case receive an answer in the affirmative and would therefore have the illusion of having purchased an original product.

The use of chips or other systems not directly accessible for the validation of a product is not free from risks: a dishonest producer could imitate the same chips, in addition to the product in itself, and moreover it definitely cannot be thought that an ordinary customer be provided with the equipment necessary for collecting information stored on the electronic medium. The same checking operation would therefore be assigned to the retailer who should check all the products one by one, or most likely on a sampling basis, with a consequent waste of time and increase in running costs and without any guarantee for the end user since the latter has to trust the retailer blindly.

Moreover with these systems it is extremely difficult for firms to obtain reliable information on possible counterfeiting and sales of its goods: possible validation of an identification code by a customer may in fact depend on the counterfeiting of the same code and therefore of the product.

The object of the present invention is that of protecting a computer process and system which allows a firm or other organisations, such as the police, inspectors, etc., to perform in real time both a specific analysis and a statistical analysis of requests for checking the identification codes associated with products, analysing the number of requests on a same code, the geographical origin, the instant and time interval between the same, to allow in-depth processing of the data and highlighting of the anomalies which can be traced to possible counterfeiting or unlawful behaviour of producers or vendors.

Another object of the present invention is that of protecting a computer process and system which, together with the sending to the user of information relating to an identification code, such as for example information on the origin, traceability, use and maintenance, etc. of the product or the service associated with it, receives a series of feedback from the user which allows updating of the information relating to said identification code present in a special database or which enables specific information to be obtained in the case of anomalies found so as to identify in the greatest detail the most significant elements of these anomalies. Said feedback is composed of information such as, for example, the intention to purchase, user satisfaction, etc., or the shop in which the product can be found or where the product was purchased, any discrepancies between the information received and the product which is the subject of the check, etc.

Yet another object of the present invention is that of illustrating a computer system and process which allows the check of the authenticity of a code by comparing data sent by a user via any means of communication with the data contained in a database.

These and other aspects will be made clearer on reading of a preferred embodiment of the present invention, to be read by way of a non-limiting example of the more general concepts claimed.

The following description refers to the accompanying drawings, in which:

Figure 1 is a representation of the flow of information between the system and the various users connected thereto;

Figure 2 is a functional representation of the elements which make up the system according to the present invention;

Figures 3a and 3b are a block diagram of the process for checking authenticity according to the present invention.

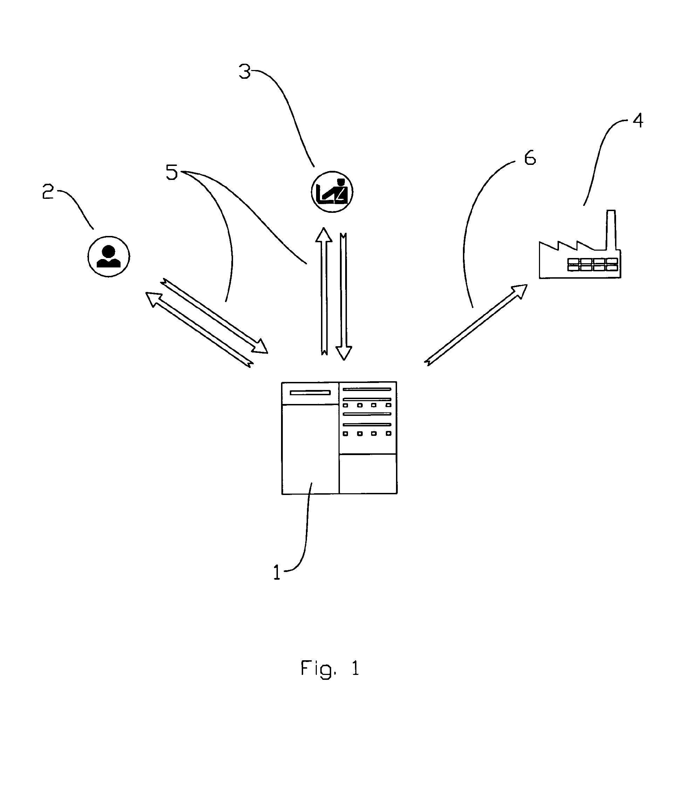

Referring to Figure 1, at least three types of users are connected to the system 1, via any means of communication: an anonymous user 2, for example a purchaser, who does not have a reserved access key and who can access a limited amount of information, an authorised user 3, for example an inspector or a customs agent or another authorised person, with an access key which can access information reserved for him or her, and finally the firm 4, which can obtain from the system all the information contained therein.

The distinction between the various types of users and the various levels of access means that a purchaser may request information on the authenticity of a code without however having access to information on the requests made by other users on the same code or on codes linked to similar products. Contrarily an inspector will be authorised to check the information linked to the destination of the products and to the requests made on one or more codes for highlighting any anomalies, etc. Finally the manufacturing firm will have access to all the information linked to its products, so as to be able to highlight any anomalies linked to unlawful behaviour or plan market strategies on the basis of the information obtained by the purchasers.

The exchange of information between purchasers/inspectors and the system is two-way, as shown by the arrows 5: when the system 1 receives a request for a check, for example from a purchaser 2, it asks the same user to specify whether he or she intends buying the product or whether it has already been purchased, the shop in which he or she has seen or purchased the product, the degree of satisfaction, etc. This information, in addition to creating feedback useful for highlighting any anomalies linked to unlawful conduct, as will be explained further on, is necessary for the firm 4 for performing market research and/or satisfying the tastes of its customers.

When an authorised user 3 requests a check, the system on the one hand supplies information, including that not supplied to an end user, while on the other hand it asks the authorised user to supply particular information: for example the origin of the product linked to the code (if, for example, the user is a customs inspector), the destination, the number of products, authorisation of the carrier, etc.
In this case too the feedback received from the inspector 3 is useful for highlighting any anomalies linked to unlawful conduct. Moreover, if the identification code is recognised as counterfeited by the system 1, the inspector 3 can proceed in real time with in-depth investigations and the possible block of the product.

The firm 4 receives from the system 1 all the information processed on the basis of requests for a check and the information sent by the users 2 and 3. The two-way exchange of information, schematised by the arrows 5 of Figure 1, in fact serves to allow the system 1 to collect the information linked to the preferences, the places and the modes of purchasing of the purchaser 2, in addition to specific information from the inspector 3, and to obtain above all data on the products and hence anomalies linked to commercial fraud. All this information is then passed to the firm 4 as schematised by the arrow 6.

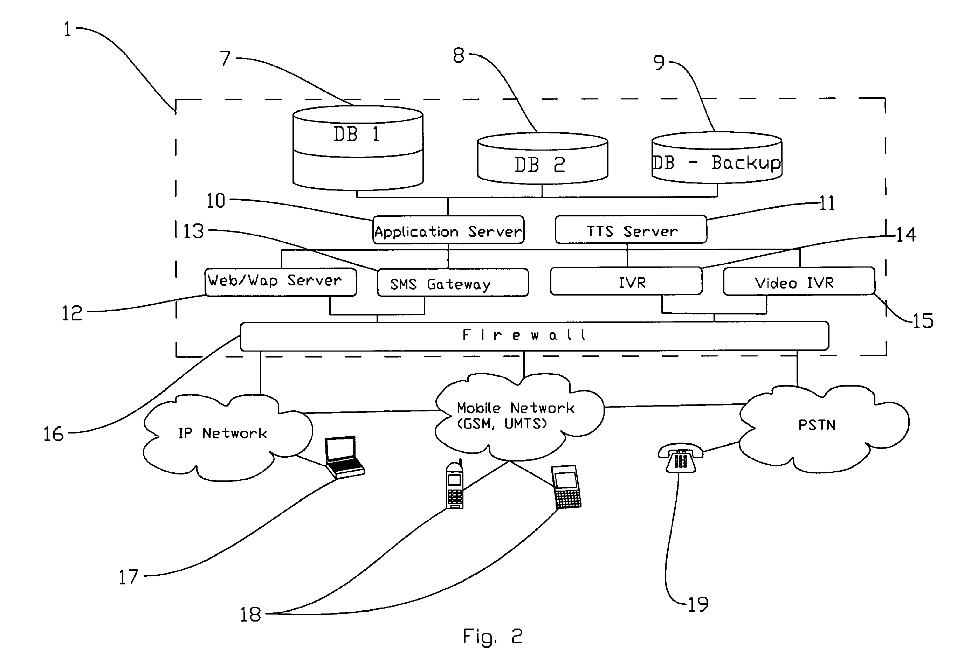

Referring to Figure 2, the system 1 is composed of various elements, in particular as regards storage of the data three different databases are used: a database 7, whose function is that of storing the identification codes of the products, together with all the information relating to the same, a database 8, whose function is that of storing every individual activity performed within the system, such as for example configurations, entry of data, data exchanged during checking operations, etc., and a backup database 9 for the continuous and complete saving of the information for ensuring maximum protection of the data.

Two types of server are connected to the three databases: a first type 10, which we can define as Application Server, with software which controls and analyses the data according to the process which will be illustrated further on, and a second type 11, known by the name of TTS Server, to which are assigned tasks of generating audio files relating to the descriptions of the products associated with the single identification codes. This server is activated whenever a code is checked via a "sound" channel or via the telephone or video telephone.

Connected to said servers are systems specialised in the management of the interactivity associated with various communication channels, i.e. Web/Wap servers 12 for http interfaces via an Internet connection, SMS servers 13 for interaction via text messages with cellular phones, IVR servers 14 for audio telephone interfaces and video servers IVR 15 for video and audio interfaces with video telephones.

Access to said specialised systems is filtered by a Firewall 16, which controls all accesses and enabling for requesting or changing the data present in the databases. The accesses, both for functions of entry and of consultation of the data, are guaranteed on the basis of authorisations and accounts configured as a function of the privileges granted. Greater privileges will be granted to the system administrators, company owners or inspection organisations, whereas there will be greater limitations in respect of customers, who may for example only check on the authenticity of the single identification code.

The system can be accessed via any means of communication, for example by means of a PC 17 connected to the Internet, by means of a cellular phone 18 via SMS or Wap, by means of a telephone 19 via vocal commands, etc.

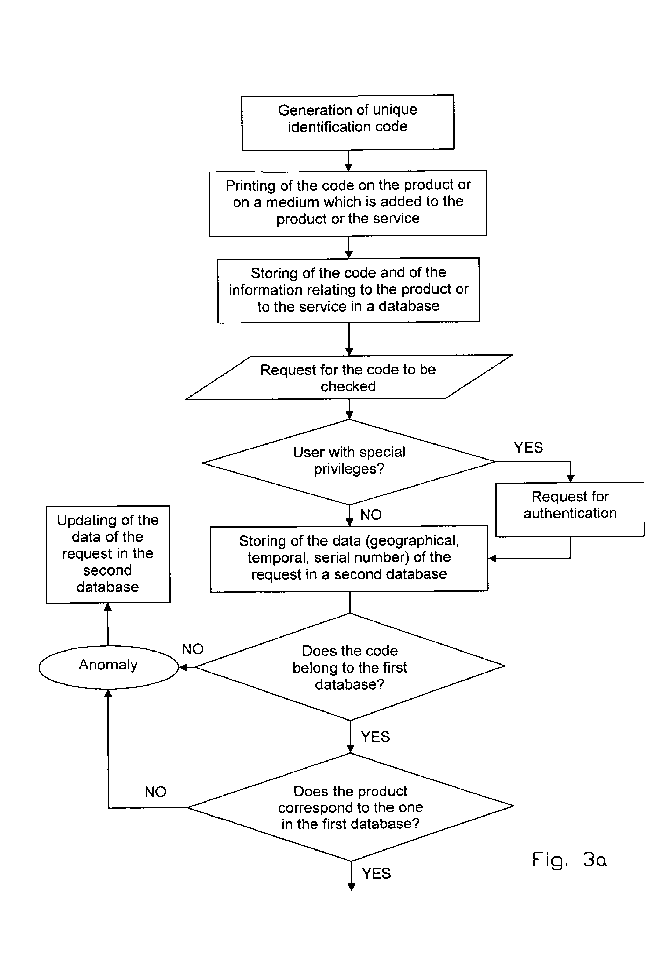

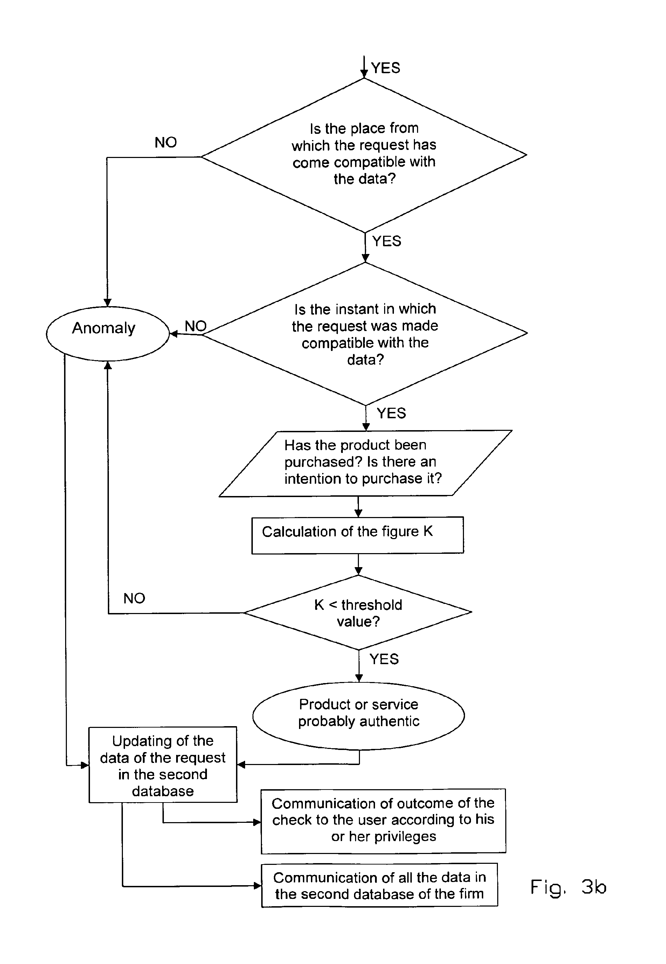

A description will now be given of how a unique code is associated with each product and the innovative process of checking the authenticity of the same, more particularly referring to Figures 2, 3a and 3b.

The identification code is generated from a basic numerical sequence, said numerical sequence established by the manufacturing firm which associates with each product a different number, including sequential, which for example identifies the production batch, the element produced in that batch, etc.

Said numerical sequence is then encrypted via an appropriately developed mathematical algorithm able to generate codes composed of various characters (for example 12, 14, 16, 18, 20, etc.). The codes generated in this way are not sequential and it is not possible to generate a valid code without knowledge of the algorithm. The high number of characters allows the generation of over a billion different codes, enabling association of a unique code with each product which is to be protected also for large-scale production ranges.

Once the identification code has been associated with the product, the code is stored in the database 1 and, with it, all the information relating to the actual product are stored: for example manufacturing firm, traceability, possible data of the vendor, possible instructions manual, etc. The same code is added to or associated with the product, for example printed on the product or on a label or on another usable medium.

When a purchaser intends checking an identification code, the system is activated, automatically obtaining first of all, in relation to the specific channel used (i.e. Internet connection, SMS, telephone, etc.) some basic information including, for example, the possible nationality of the purchaser, the geographical location of the same and the time instant in which the check request was sent. This information is stored in the database 8 and associated with the identification code.

The system starts by asking the purchaser to indicate the identification code of the product. If the code entered corresponds to an enabled code and existing in the database 7, the system asks the purchaser if he or she has already purchased or whether he or she intends purchasing the product or otherwise, storing the answer in the database 8.

Subsequently the system communicates the description of the product associated with the identification code and then asks the purchaser whether the description corresponds to the product. If the answer is affirmative, the system continues by supplying all information linked to the actual product (for example origin, quality, maintenance and anything else, also of the interactive type, is seen as consequent interaction). If the answer is negative, the system interacts with the purchaser with specific requests in order to be able to obtain data useful for understanding the occurrence, possibly communicating that the product whose authenticity is to be checked may not be original.

If the code entered does not correspond to any code present in the database 7, the system interacts with the purchaser with specific requests in order to be able to obtain data useful for understanding the occurrence, possibly communicating that the code is nonexistent or that the product whose authenticity is to be checked is probably not original.

It may also be that the code entered, albeit existing and enabled, has anomalies linked to the associated information in the database 7 (for example the code is associated with a product destined in a geographical area other than the zone of origin of the check request): in this case the system interacts with the purchaser to obtain information of the place where the product is present, even though supplying information linked to authenticity as previously indicated. The system in fact foresees that in the database 7 information may be stored relating to the distribution of the product (traceability), i.e. the information relating to the area or to the sales outlet wherein the original product is destined/marketed.

If there is a code associated with a product destined for another geographical zone compared to the zone of origin of the check request, the system detects the anomaly: a similar event could depend on the sale of products with identification codes copied from the originals and sold elsewhere.

The first check may lead to subsequent requests for a check on the same identification code, thus the system behaves differently in relation to the type, geographical location, time interval, etc. of the subsequent requests that are acquired and interpreted as "coherent", for example if the product is later purchased after a check prior to the purchase and in the same geographical area, or as "anomalies": For example, if the code entered by the customer, although present in the database 7, has already been used for a check of authenticity for a product for which the purchaser has communicated the intention to purchase, yet in a geographical location not corresponding to the previous location, the system detects the anomaly, interacts with the purchaser and, on the basis of the data received, can inform directly that there could be a counterfeiting.

Similarly, if the same code has been used previously for a check of authenticity and the product was found to have been sold on the occasion of said check, the system interacts, acquires further information and reports the anomaly to the purchaser. In this case the product sold has come out of the market and finding again the same code on sale implies that the product sold previously or that for which the purchaser requests the check is counterfeited.

A purchaser may however check the same product several times also after purchase, these checks will probably be distinguished by some indicative elements such as a short time interval, the same origin of the request (telephone number, IP address), same area, etc.: for example once in the shop and shortly after having arrived home with the product purchased. In this case the system takes account of the short interval of time between one check and another and does not consider the second check request as anomalous.

Should the system report an anomaly, the system foresees that some specific questions are asked of the purchaser on the basis of the type of the anomaly, for example leaving the data relating to the place in which the product has been seen or purchased.

All the information gathered in this way is used to supply the manufacturing firm the most specific data possible in order to proceed with the necessary checks or even via the inspection bodies on reporting to the same.

The system uses various parameters, partly defined directly by the manufacturing firm on the basis of its objectives or needs, to establish whether there is an anomaly.

For example the system, in addition to analysing the location and time interval between the check requests, also stores the number of requests relating to the same identification code: a number of requests that is too high, even if there are no geographical or time anomalies, could imply the cloning of the same code. Since the customer can perform a check even before purchasing a product and, following the check, may decide whether to purchase it or otherwise, the number of checks on a single code is not indicative in itself of a possible cloning. A method has therefore been developed which takes account also of the answers given by the customer once a code has been checked. If the customer communicates having purchased the product, the check performed thereby is assigned a greater *Pacq* weight; if the customer communicates the intention to purchase the product, a lower *Pint* weight is assigned to the check; finally, if the check does not entail purchase, the *Pver* weight assigned is even lower.

For each code the checks performed are counted: *Nacq* is the number of times the code has been checked following a purchase (if there is no counterfeiting *Nacq*=1, because only the original product has been purchased), *Nint* is the number of times the code has been checked following the purchase intention and *Nver* is the number of times the code has been checked without entailing purchase. The number of checks performed is stored in the database 2 and processed by the application server 4.

The server 4 calculates a figure K in the following way:

$$K= Nacq \times Pacq \; + \; Nint \times Pint \; + \; Nver \times Pver$$

If K is greater than or equal to an established threshold value, the system highlights the anomalous code. The value of weights P and of the threshold are set by the manufacturing firm or by the system administrator on behalf of the same.

Every anomaly found is reported or otherwise to the purchaser (some anomalies are of exclusive interest to the manufacturing firm, for example traceability) yet in any case it is communicated in real time to the manufacturing firm which can take action to discover the possible commercial fraud.

Summing up and referring to Figures 3a and 3b, the operations performed for checking the authenticity of a product are the following:

- generation of a unique code for every product
- printing of the code on the product or on a medium which is added to/associated with the product or the service
- storing of the code in a database 7, wherein together with said code all the useful information relating to the product or to the service associated therewith is stored
- sending via any means of communication of a code to be checked by a purchaser or an inspector
- automatic acquisition by the system of a set of information relating to the geographical and time location of the check request, to the telephone number or to the IP address of the applicant, to the serial number of the request for said code and the saving of said information in a dedicated database 2 always connected to the identification code requested
- checking of the presence of the code sent in the database 1 containing the original codes and, if affirmative, request for conformity of the product or of the service
- checking of possible anomalies: geographical, temporal in the number of requests by calculating the figure K, etc.
- interaction with those who make the check request with a set of variable questions in order to gain information, should any anomaly be highlighted
- communication of the result of the check to the purchaser or to the inspector
- communication to the manufacturing firm of all the checks performed (including all related data) and in particular of the anomalies found, with the information collected, interpreted and highlighted so as to provide data useful for company decisions and relative intervention.

All the requests, information, etc. are always stored in the database 8, associated with each identification code, so as to allow the manufacturing firm to keep under control and check at any time the status of the check requests relating to all the products and the problems which may have been highlighted.

The possibility of performing checks and obtaining privileged information can also be granted to control or inspection bodies: via a dedicated account they can access the database 8, normally reserved for the firm and in any case not accessible by the normal user, and analyse the requests for a check of authenticity in order to trace possible situations of commercial fraud.

Thus a process is performed of checking and monitoring of the products whose essential element consists of using the physical products distributed on the market as a vehicle for generating two-way and interactive interrogations with a computer system aimed at the generation, collection, analysis and interpretation of data suitable for the comprehension of phenomena linked to the market, to commercial fraud, and to the preferences, tastes, places and modes of purchase of consumers.

**Claims**

1. System and computer process for checking and monitoring the circulation of products or services of a firm and/or organisation and possible commercial fraud, **characterised in that** two-way channels are activated via which the users of said system (consumers, inspectors, customs, manufacturing firms and/or organisations) are both supplied and asked for specific information on said products or services, information that is processed and interpreted by the system to be supplied in a differentiated manner to the same users on the basis of specific authorisations for access to said system.

2. System and computer process for checking and monitoring the circulation of products or services and possible commercial fraud according to the previous claim, **characterised in that** physical products or services distributed on the market are used, with which a unique identification code is associated, as a vehicle for leading the purchase or inspector to send the request for a check of the validity of the same code, said request being conveyed via any means of communication and generating an interaction with said computer system for obtaining intentionally, via specific questions, or non-intentionally, via the telephone number, IP address, etc., data useful for checking and monitoring circulation of said products or services and the possible presence of commercial fraud.

3. System and computer process for checking and monitoring the circulation of products or services and possible commercial fraud according to the previous claim, **characterised in that** said useful data obtained intentionally or non-intentionally via the interaction with said computer system, are stored, processed and interpreted, and are then sent in a differentiated manner to the users of the system via said communication channels.

4. System and computer process for checking and monitoring the circulation of products or services and possible commercial fraud according to the previous claims, **characterised in that** it is composed of a first database wherein the identification codes and all useful information are stored, such as for example traceability, production chain, quality, etc., linked to said goods or services, a system of servers for accessing said database and a second system of servers for managing said requests for checking identification codes, a second database is also present wherein said requests for a check and the data relative thereto are stored, said second database being inaccessible to non-authorised third parties.

5. System and computer process for checking and monitoring the circulation of products or services and possible commercial fraud according to the previous claim, **characterised in that** access to said second database is reserved, in addition to the manufacturing firm or organisation which can access all the data therein, for the sole authorised users, such as inspectors or control bodies who, subject to authentication, can obtain information on any code or on any anomaly linked to possible illegality or commercial fraud.

6. System and computer process for checking and monitoring the circulation of products or services and possible commercial fraud according to claim 4, **characterised in that** a purchaser, i.e. a user without authorisation, can obtained from the system information limited to the single identification code entered thereby.

7. System and computer process for checking and monitoring the circulation of products or services and possible commercial fraud according to claim 4, **characterised in that** said procedure of checking and monitoring comprises any combination of the following phases:

   - generation of a unique code for every product or service

- printing of the code on the product or on a medium which is combined with the product or service
- storing of the code in said first database, wherein with said code all the useful information relating to the product or to the service associated therewith are stored
- sending via any communication means of a code to be checked by a purchaser or an inspector
- automatic acquisition by the system of a set of information relating to geographical and temporal location of the check request, the telephone number of IP address of the applicant, the serial number of the request for said code and the saving of said information in said second database dedicated and connected to the identification code requested
- check of the presence of the code sent in the first database containing the original codes and, in the affirmative, the request of conformity of the product held by the customer or the inspector with the product or service stored in said first database
- checking any geographical anomalies, i.e. between the origin of the request and the place stored in the first or in the second database in relation to said code
- checking of any time anomalies, i.e. an excessive time distance between one check and the next for the same code
- checking of possible anomalies in the number of requests on a same code, i.e. the occurrence of an excessive number of requests of a check for the same code
- interaction with those who request a check with a set of variable questions, in order to gain additional information on the product or on the service linked to the code for which a check is performed
- communication of the outcome of the check to the purchaser or to the inspector
- communication to the manufacturing firm of all the checks performed, including every related item of data, and in particular of the possible anomalies found with the information collected, interpreted and highlighted in order to provide useful data in relation to possible commercial fraud or market research.

8. System and computer process for checking and monitoring the circulation of products or services and possible commercial fraud according to the previous claim, **characterised in that** said combination can be temporal, i.e. entailing the actuation of said phases in any order, or selective, i.e. entailing the exclusion of one or more phases from said check procedure.

9. System and computer process for checking and monitoring the circulation of products or services and possible commercial fraud according to claim 7, **characterised in that** said variable questions for gaining additional information on the product linked to the code for which the check is requested include, in the case of the user being identified as a purchaser, the request of the intention to proceed with purchase of the product or, if said product has already been purchased, the place of purchase, the satisfaction of the purchaser and all the information which the manufacturing firm considers important for monitoring of its products.

10. System and computer process for checking and monitoring the circulation of products or services and possible commercial fraud according to claim 7, **characterised in that** said variable questions for gaining additional information on the product linked to the code for which the check is requested comprise, should the user be authenticated like an inspector, questions on the place in which the investigation is performed (customs, commercial enterprise, etc.), origin of the product, destination, authorisations for transport and/or sale and all the information which the manufacturing firm considers important for monitoring of its products.

11. System and computer process for checking and monitoring the circulation of products or services and possible commercial fraud according to claim 7, **characterised in that** communication of the outcome of the check, should the user be authorised like an inspector, includes the detailed communication of the possible anomalies found in relation to the code checked.

12. System and computer process for checking and monitoring the circulation of products or services and possible commercial fraud according to claims 7 and 8, **characterised in that** the check on any anomalies in the number of requests on the same code is based on the exceeding of an arbitrary threshold level of a figure K calculated according to the expression:

$$K = Nacq \times Pacq \; + \; Nint \times Pint \; + \; Nver \times Pver$$

wherein *Nacq* is the number of times the code has been checked following a purchase, *Nint* is the number of times the code has been checked following the intention of purchase, *Nver* is the number of times the code has been checked without entailing purchase and *Pacq, Pint* and *Pver* are arbitrary coefficients which take account of the importance given by the manufacturing firm to each of the three types of check.

13. System and computer process for checking and monitoring the circulation of products or services and possible commercial fraud according to claim 2, **characterised in that** said interaction between those who perform the check and said computer system consists in the supply of information linked to the product in the case of anomalies not being highlighted, or information useful for locating possible commercial fraud should these anomalies be present.

14. System and computer process for checking and monitoring the circulation of products or services and possible commercial fraud according to claim 1, **characterised in that** it allows marketing information to be obtained by consumers such as for example preferences, modes of purchase, satisfaction, etc.

15. System and computer process for checking and monitoring the circulation of products or services and possible commercial fraud according to claim 1, **characterised in that** it enables control bodies, for example customs, to be offered a simple and direct means for controlling and reporting in real time possible anomalies or commercial fraud.

Fig. 1

Fig. 2

Generation of unique
identification code

Printing of the code on the product or
on a medium which is added to the
product or the service

Storing of the code and of the
information relating to the product or
to the service in a database

Request for the code to be
checked

User with special
privileges?                    YES

NO                             Request for
                               authentication

Updating of the
data of the         Storing of the data (geographical,
request in the      temporal, serial number) of the
second              request in a second database
database

                    NO      Does the code
Anomaly                     belong to the first
                            database?

                            YES

           NO      Does the product
                   correspond to the one
                   in the first database?

                            YES

                                        Fig. 3a

Fig. 3b

**European Patent Office**

**EUROPEAN SEARCH REPORT**

Application Number

EP 08 00 8896

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2005/083644 A (STIKKER COM BV [NL]; MAYERS JEROEN [NL]; KLEINHERENBRINK BERNARDUS JOH) 9 September 2005 (2005-09-09) * page 5, line 21 - page 8, line 18 * * figure 2 * | 1-15 | INV. G06Q30/00 |
| X | WO 2006/100581 A (ARTI GRAFICHE JULIA S P A [IT]; EDISTAR SRL [IT]; LAPENNA ADRIANO [IT]) 28 September 2006 (2006-09-28) * abstract * * page 2, line 5 - page 5, line 24 * * page 6, line 11 - page 8, line 29 * * figure 1 * | 1-15 | |
| D,X | US 2004/019791 A1 (WHYTE GARRY R [US]) 29 January 2004 (2004-01-29) * paragraph [0040] - paragraph [0049] * * paragraph [0085] - paragraph [0094] * * figures 1,8 * | 1-15 | |
| X | DE 10 2004 032113 A1 (FOERDERUNG ANGEWANDTER INFORMA [DE]) 19 January 2006 (2006-01-19) * abstract * * paragraph [0021] - paragraph [0036] * * claim 6 * | 1-15 | TECHNICAL FIELDS SEARCHED (IPC)  G06Q H04N G07D |

The present search report has been drawn up for all claims

| Place of search | Date of completion of the search | Examiner |
|---|---|---|
| The Hague | 27 August 2008 | Bohner, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 08 00 8896

This annex lists the patent family members relating to the patent documents cited in the above-mentioned European search report.
The members are as contained in the European Patent Office EDP file on
The European Patent Office is in no way liable for these particulars which are merely given for the purpose of information.

27-08-2008

| Patent document cited in search report | | Publication date | Patent family member(s) | Publication date |
|---|---|---|---|---|
| WO 2005083644 | A | 09-09-2005 | NONE | |
| WO 2006100581 | A | 28-09-2006 | NONE | |
| US 2004019791 | A1 | 29-01-2004 | NONE | |
| DE 102004032113 | A1 | 19-01-2006 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2004019791 A